(19) Europäisches Patentamt / European Patent Office / Office européen des brevets

(11) EP 4 310 400 A1

(12) EUROPÄISCHE PATENTANMELDUNG

(43) Veröffentlichungstag:
24.01.2024 Patentblatt 2024/04

(21) Anmeldenummer: 23186142.8

(22) Anmeldetag: 18.07.2023

(51) Internationale Patentklassifikation (IPC):
F23R 3/28 (2006.01)      F23R 3/36 (2006.01)

(52) Gemeinsame Patentklassifikation (CPC):
F23R 3/283; F23R 3/36; F23R 2900/00002

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(30) Priorität: 21.07.2022 DE 102022207492

(71) Anmelder: Rolls-Royce Deutschland Ltd & Co KG
15827 Blankenfelde-Mahlow (DE)

(72) Erfinder: Clemen, Carsten
15827 Blankenfelde-Mahlow (DE)

(54) **DÜSENVORRICHTUNG ZUR ZUGABE ZUMINDEST EINES GASFÖRMIGEN KRAFTSTOFFES UND EINES FLÜSSIGEN KRAFTSTOFFES, SET, ZULEITUNGSSYSTEM UND GASTURBINENANORDNUNG**

(57) Die Erfindung betrifft eine Düsenvorrichtung (1) zur Zugabe zumindest eines gasförmigen Kraftstoffes und eines flüssigen Kraftstoffes in eine Brennkammer einer Gasturbinenanordnung, insbesondere eines Triebwerks eines Luftfahrzeugs, umfassend
- einen Düsenhauptkörper (1a) mit Düsenöffnungen (12) zur Einspritzung des gasförmigen Kraftstoffes und/oder des flüssigen Kraftstoffes in die Brennkammer, und
- zumindest eine Flüssig-Kraftstoffleitung (4) zur Strömungsverbindung zwischen einem Flüssig-Zuleitungssystem (6) und den Düsenöffnungen (12), und zumindest eine Gas-Kraftstoffleitung (2) zur Strömungsverbindung zwischen einem Gas-Zuleitungssystem (7) und den Düsenöffnungen (12).

Ein optimierter Betrieb mit gasförmigen und/oder flüssigen Kraftstoffen wird dadurch erreicht, dass zumindest abschnittsweise, in zumindest einem korrelierten Abschnitt (13), die Gas-Kraftstoffleitung (2) korreliert zu der Flüssig-Kraftstoffleitung (4) ausgelegt ist, wobei ein Strömungsquerschnitt AiH2 der Gas-Kraftstoffleitung (2) zu einem Strömungsquerschnitt AiK der Flüssig-Kraftstoffleitung (4) mit einem Faktor F proportional ist, wobei gilt: $AiH2 = F \cdot Aik$, mit F zwischen 2,4 und 3, vorzugsweise zwischen 2,6 und 2,8, z. B. 2,7

Fig. 1

EP 4 310 400 A1

**Beschreibung**

Die Erfindung betrifft eine Düsenvorrichtung zur Zugabe zumindest eines gasförmigen Kraftstoffes und eines flüssigen Kraftstoffes in eine Brennkammer einer Gasturbinenanordnung, insbesondere eines Triebwerks eines Luftfahrzeugs, umfassend einen Düsenhauptkörper mit Düsenöffnungen zur Einspritzung des gasförmigen Kraftstoffes und/oder des flüssigen Kraftstoffes in die Brennkammer, und zumindest eine Flüssig-Kraftstoffleitung zur Strömungsverbindung zwischen einem Flüssig-Zuleitungssystem und den Düsenöffnungen, und zumindest eine Gas-Kraftstoffleitung zur Strömungsverbindung zwischen einem Gas-Zuleitungssystem und den Düsenöffnungen. Die Erfindung betrifft ferner ein Set umfassend zumindest eine Gas-Anschlussleitung und zumindest eine Flüssig-Anschlussleitung, ein Set umfassend zumindest eine Gas-Ringleitung und eine Flüssig-Ringleitung, ein Zuleitungssystem und eine Gasturbinenanordnung.

Eine Düsenvorrichtung der vorstehenden Art ist in der US 2016/0 201 897 A1 angegeben.

Eine Gasturbinenanordnung mit einem Zuleitungssystem der vorstehenden Art ist in der CN 112 709 639 A angegeben.

Bei bekannten Gasturbinenanordnungen, insbesondere Triebwerken für Luftfahrzeuge, beispielsweise wie vorstehend angegeben, können Kraftstoffe unterschiedlicher Art, insbesondere flüssige und/oder gasförmige Kraftstoffe, alternativ zueinander oder zeitgleich mittels einer Düsenvorrichtung in den Brennraum eingespritzt werden. Dabei besteht das Bestreben, den Betrieb der Gasturbinenanordnung weiter zu optim ieren.

Der vorliegenden Erfindung liegt die Aufgabe zugrunde, eine Düsenvorrichtung sowie ein Zuleitungssystem und eine Gasturbinenanordnung für einen optimierten Betrieb mit flüssigen und gasförmigen Kraftstoffen bereitzustellen.

Die Aufgabe wird bezüglich der Düsenvorrichtung mit den Merkmalen des Anspruchs 1 gelöst. Vorteilhafte Ausgestaltungsvarianten sind in den abhängigen Ansprüchen angegeben.

Zur Lösung der Aufgabe wird bezüglich der Düsenvorrichtung vorgeschlagen, dass zumindest abschnittsweise, in zumindest einem korrelierten Abschnitt, die Gas-Kraftstoffleitung korreliert zu der Flüssig-Kraftstoffleitung ausgelegt ist, wobei ein Strömungsquerschnitt $AiH2$ der Gas-Kraftstoffleitung zu einem Strömungsquerschnitt $AiK$ der Flüssig-Kraftstoffleitung mit einem Faktor F proportional ist, wobei gilt:

$AiH2 = F * Aik$, mit F zwischen 2,4 und 3, vorzugsweise zwischen 2,6 und 2,8, z. B. 2,7.

Die Gas-Kraftstoffleitung und/oder die Flüssig-Kraftstoffleitung dienen insbesondere zur gesammelten Zuleitung des gasförmigen bzw. flüssigen Kraftstoffes von dem Gas- und/oder Flüssig-Zuleitungssystem an den Düsenhauptkörper mit, z. B. jeweils, einer Gas- und/oder Flüssig-Verteileranordnung zur Aufteilung des jeweiligen Kraftstoffstromes auf die Düsenöffnungen.

Der Strömungsdurchmesser ist insbesondere innerhalb des korrelierten Abschnittes konstant. Die Korrelation bezieht sich insbesondere auf einen axial und/oder bezüglich des Leitungsverlaufs gleich bzw. gleichartig (z. B. an gleicher relativer Position) positionierten Abschnitt der Gas-Kraftstoffleitung und der Flüssig-Kraftstoffleitung, innerhalb dessen der korrelierte (axiale) Abschnitt gebildet ist.

Es hat sich herausgestellt, dass mit einer derartigen Auslegung vorteilhafterweise ähnliche Strömungsbedingungen für die gasförmigen, insbesondere wasserstoffbasierten, Kraftstoffe und die flüssigen Kraftstoffe aufweisend typische Eigenschaften eines kerosinbasierten und/oder kerosinverwandten Kraftstoffes (z. B. Jet A-1, Diesel oder ein synthetischer Ersatzkraftstoff (SAF - "sustainable aviation fuel")) unter typischen, im Boden- und/oder Flugbetrieb vorherrschenden Bedingungen erreicht werden können. Auf diese Weise wird der Betrieb einer Gasturbinenanordnung mit einer vorgeschlagenen Düsenvorrichtung z. B. hinsichtlich der Steuerung/Regelung wesentlich vereinfacht und optimiert.

In einer bevorzugten Ausbildungsvariante ist der korrelierte Abschnitt zumindest innerhalb eines Düsenhalters der Düsenvorrichtung angeordnet. Der Düsenhalter ist insbesondere zwischen dem Zuleitungssystem und dem Düsenhauptkörper (z. B. umfassend die Verteileranordnung/en) angeordnet.

Besonders vorteilhaft aufeinander abgestimmte Strömungsverhältnissen sind erreichbar, wenn der korrelierte Abschnitt über einen Großteil, mehr als 50 %, vorzugsweise mehr als 80 %, der Länge der Gas-Kraftstoffleitung und der Flüssig-Kraftstoffleitung erstreckt ist, z. B. ausgenommen von Übergangsbereichen. Ein Übergangsbereich wird insbesondere von einem Leitungsabschnitt gebildet, in dem sich die Anordnung der Gas-Kraftstoffleitung und der Flüssig-Kraftstoffleitung zueinander und/oder die Ausbildung und/oder der Verlauf von zumindest (oder lediglich) einer der beiden Kraftstoffleitungen (z. B. bezüglich des Strömungsquerschnitts und/oder der Krümmung) ändert.

Vorzugsweise weisen die Gas-Kraftstoffleitung und/oder die Flüssig-Kraftstoffleitung zumindest in dem korrelierten Abschnitt einen kreisförmigen Umfang des Strömungsquerschnitts $AiH2$, $AiK$ auf. Dies ist z. B. bei einem kreisförmigen und/oder kreisringförmigen Strömungsquerschnitt der Fall.

In einer bauraumoptimierten Ausbildungsvariante ist die Gas-Kraftstoffleitung zumindest in dem korrelierten Abschnitt, insbesondere zylindrisch und/oder koaxial, um die Flüssig-Kraftstoffleitung angeordnet. Auf diese Weise ist die Gas-Kraftstoffleitung als Ringspalt ausgebildet bzw. weist einen Ringspalt auf, der die Flüssig-Kraftstoffleitung koaxial und vorzugsweise symmetrisch umgibt.

Dabei ergibt sich für die Korrelation folgender Zusammenhang:

AiK = 0,25 × π × (DiK)$^2$ (Kreisfläche des Strömungsquerschnitts der Flüssig-Kraftstoffleitung),
AiH2 = 0,25 × π × (DiH2)$^2$ - 0,25 × π × (DiK + 2 × d)$^2$ (Kreisringfläche des Strömungsquerschnitts der Gas-Kraftstoffleitung)

$$DiH2 = \sqrt{4 \times (AiH2 + 0,25 \times \pi \times (DiK + 2 \times d)^2)/\pi}$$

mit AiH2 = F * AiK , mit F = 2,7 oder 2,6 bis 2,8.

Beispielhafte Werte ergeben sich zu:

DiK = 6 mm
AiK = 28,27 mm$^2$

$$AiH2 = 2,7 * AiK = 76,34 \text{ mm}^2$$

d = 0,5 mm
DiH2 = 12,09 mm

Besonders günstige Strömungsverhältnisse werden mit der angegebenen Korrelation erreicht, wenn die Düsenvorrichtung zum (gleichzeitigen und/oder zeitversetzten) Betrieb mit Wasserstoff als gasförmigem Kraftstoff und einem kerosinbasierten und/oder einem kerosinverwandten Kraftstoff als Flüssig-Kraftstoff (z. B. Jet A-1, Diesel oder ein synthetischer Ersatzkraftstoff (SAF - "sustainable aviation fuel")) ausgelegt ist, insbesondere hinsichtlich der (übrigen) Strömungsquerschnitte, Material- und/oder Dichtmittelauswahl oder dergleichen.
Zur Lösung der Aufgabe wird ferner ein Set vorgeschlagen, umfassend zumindest eine Gas-Anschlussleitung und zumindest eine Flüssig-Anschlussleitung zum Einbau in ein Zuleitungssystem mit einem Gas-Zuleitungssystem zur Führung eines gasförmigen Kraftstoffes an zumindest eine Düsenvorrichtung und mit einem Flüssig-Zuleitungssystem zur Führung eines flüssigen Kraftstoffes an zumindest eine Düsenvorrichtung.
Dabei ist vorgesehen, dass zumindest abschnittsweise, in zumindest einem korrelierten Abschnitt, die Gas-Anschlussleitung korreliert zu der Flüssig-Anschlussleitung ausgelegt ist, wobei ein Strömungsquerschnitt AiH2 der Gas-Anschlussleitung zu einem Strömungsquerschnitt AiK der Flüssig-Anschlussleitung mit einem Faktor F proportional ist, wobei gilt:
AiH2 = F *Aik, mit F zwischen 2,4 und 3, vorzugsweise zwischen 2,6 und 2,8, z. B. 2,7.
Der korrelierte Abschnitt bezieht sich insbesondere auf einen gleichartigen Abschnitt (beispielsweise mit gleicher relativer Position, z. B. bzgl. der Länge und/oder einem Ende der jeweiligen Anschlussleitungen) innerhalb der jeweiligen Anschlussleitung.
Die Gas-Anschlussleitung und/oder die Flüssig-Anschlussleitung ist/sind insbesondere flexibel ausgestaltet und/oder weisen die gleiche Länge auf. Insbesondere sind pro Düsenvorrichtung genau eine Gas-Anschlussleitung und genau eine Flüssig-Anschlussleitung vorhanden. Die Gas-Anschlussleitung dient zur Strömungsverbindung der Gas-Kraftstoffleitung mit einer Gas-Ringleitung eines Zuleitungssystems. Die Flüssig-Anschlussleitung dient zur Strömungsverbindung der Flüssig-Kraftstoffleitung mit einer Flüssig-Ringleitung eines Zuleitungssystems.
Das Gas-Zuleitungssystem umfasst insbesondere eine, z. B. genau eine, Gas-Ringleitung und zumindest eine Gas-Anschlussleitung zur Strömungsverbindung zwischen der Gas-Ringleitung und einer der Düsenvorrichtungen.
Das Flüssig-Zuleitungssystem umfasst insbesondere eine, z. B. genau eine, Flüssig-Ringleitung und zumindest eine Flüssig-Anschlussleitung zur Strömungsverbindung zwischen der Flüssig-Ringleitung und einer der Düsenvorrichtungen.
Zur Lösung der Aufgabe wird zudem ein Set vorgeschlagen, umfassend zumindest eine Gas-Ringleitung, mit insbesondere zumindest abschnittsweise kreisförmigem Strömungsquerschnitt, und zumindest eine Flüssig-Ringleitung, mit insbesondere zumindest abschnittsweise kreisförmigem Strömungsquerschnitt, zum Einbau in ein Zuleitungssystem mit einem Gas-Zuleitungssystem zur Führung eines gasförmigen Kraftstoffes an zumindest eine Düsenvorrichtung und mit einem Flüssig-Zuleitungssystem zur Führung eines flüssigen Kraftstoffes an zumindest eine Düsenvorrichtung, wobei die Düsenvorrichtung insbesondere nach einem der vorhergehenden Ansprüche ausgebildet ist.
Dabei ist vorgesehen, dass zumindest abschnittsweise, in zumindest einem korrelierten Abschnitt, die Gas-Ringleitung korreliert zu der Flüssig-Ringleitung ausgelegt ist, wobei ein Strömungsquerschnitt AiH2 der Gas-Ringleitung zu einem Strömungsquerschnitt AiK der Flüssig-Ringleitung mit einem Faktor F proportional ist, wobei gilt:
AiH2 = F *Aik, mit F zwischen 2,4 und 3, vorzugsweise zwischen 2,6 und 2,8, z. B. 2,7.

Bei jeweils kreisförmigen Strömungsquerschnitten ergibt sich folgender Zusammenhang:

$$DiH2 = 1{,}643 * DiK, \text{ mit } F = 2{,}7,$$

oder

$$DiH2 = 1{,}612 \text{ bis } 1{,}673 * DiK \text{ für } F = 2{,}6 \text{ bis } 2{,}8.$$

Die Ringleitungen sind insbesondere ringförmig außen um eine Brennkammer angeordnet und dienen zur gesammelten Leitung der jeweiligen Kraftstoffe an die Düsenvorrichtungen. An einer jeweiligen Düsenvorrichtung wird im Betrieb jeweils eine Teilmenge zum Betrieb der Düsenvorrichtung aus der Ringleitung entnommen und insbesondere mittels der Anschlussleitungen der jeweiligen Düsenvorrichtung zugeführt.

Der korrelierte Abschnitt bezieht sich insbesondere auf einen gleichartigen Abschnitt (beispielsweise mit gleicher relativer Position, z. B. bzgl. der Umlaufrichtung und/oder einem Leitungsabzweig innerhalb der jeweiligen Ringleitung) innerhalb der jeweiligen Ringleitung.

Besonders vorteilhaft aufeinander abgestimmte Strömungsverhältnissen sind erreichbar, wenn der korrelierte Abschnitt über einen Großteil, mehr als 50 %, vorzugsweise mehr als 80 %, der Länge der Gas-Anschlussleitung und der Flüssig-Anschlussleitung, und/oder der Gas-Ringleitung und der Flüssig-Ringleitung erstreckt ist, z. B. ausgenommen von Übergangsbereichen. Ein Übergangsbereich wird insbesondere von einem Leitungsabschnitt gebildet, in dem sich die Anordnung Ringleitungen und/oder Anschlussleitungen zueinander und/oder der die Ausbildung und/oder der Verlauf von zumindest (oder insbesondere lediglich) eine der beiden Ringleitungen oder Anschlussleitungen (z. B. bezüglich des Strömungsquerschnitts und/oder der Krümmung) ändert.

Besonders günstige, vergleichbare Strömungsverhältnisse werden mit der angegebenen Korrelation erreicht, wenn die Gas-Anschlussleitung und die Flüssig-Anschlussleitung und/oder die Gas-Ringleitung und die Flüssig-Ringleitung zum Betrieb mit Wasserstoff als gasförmigem Kraftstoff und einem kerosinbasierten und/oder einem kerosinverwandten Kraftstoff als Flüssig-Kraftstoff (z. B. Jet A-1, Diesel oder ein synthetischer Ersatzkraftstoff (SAF - "sustainable aviation fuel")) ausgelegt ist, insbesondere hinsichtlich der (übrigen) Strömungsquerschnitte, Material- und/oder Dichtmittel Auswahl oder dergleichen.

Bezüglich des Zuleitungssystems wird die Aufgabe gelöst mit einem Zuleitungssystem umfassend ein Gas-Zuleitungssystem zur Führung eines gasförmigen Kraftstoffes an zumindest eine Düsenvorrichtung und ein Flüssig-Zuleitungssystem zur Führung eines flüssigen Kraftstoffes an zumindest eine Düsenvorrichtung, wobei die Düsenvorrichtung insbesondere nach einem der vorhergehenden Ansprüche ausgebildet ist, mit zumindest einem Set umfassend zumindest eine Gas-Anschlussleitung und zumindest eine Flüssig-Anschlussleitung nach einer der vorstehenden Ausgestaltungsvarianten und/oder mit einem Set umfassend zumindest eine Gas-Ringleitung und zumindest eine Flüssig-Ringleitung nach einer der vorstehenden Ausgestaltungsvarianten.

Bezüglich der Gasturbinenanordnung, insbesondere Triebwerk für ein Luftfahrzeug, wird die Aufgabe gelöst mit zumindest einer Düsenvorrichtung einer der vorstehenden Ausbildungsvarianten und/oder mit zumindest einem Set und/oder Zuleitungssystem nach einer der vorstehenden Ausbildungsvarianten.

Nachfolgend wird die Erfindung anhand von Ausführungsbeispielen unter Bezugnahme auf die Zeichnungen näher erläutert. Es zeigen:

Fig. 1          eine Düsenvorrichtung mit einem Düsenhalter und einem Düsenhauptkörper sowie einem korrelierten Abschnitt einer Gas-Kraftstoffleitung und einer Flüssig-Kraftstoffleitung im Längsschnitt,

Fig. 2          eine vergrößerte Darstellung eines Teils des Düsenhalters der Düsenvorrichtung gemäß Fig. 1 im Längsschnitt und

Fig. 3A, 3B    ein Zuleitungssystem mit einer Gas-Ringleitung, einer Flüssig-Ringleitung, einer Gas-Anschlussleitung und einer Flüssig-Anschlussleitung sowie einer (Fig. 3A) bzw. vier (Fig. 3B) Düsenvorrichtung/en im Längsschnitt bzw. in Frontansicht mit Blickrichtung aus einem Brennraum.

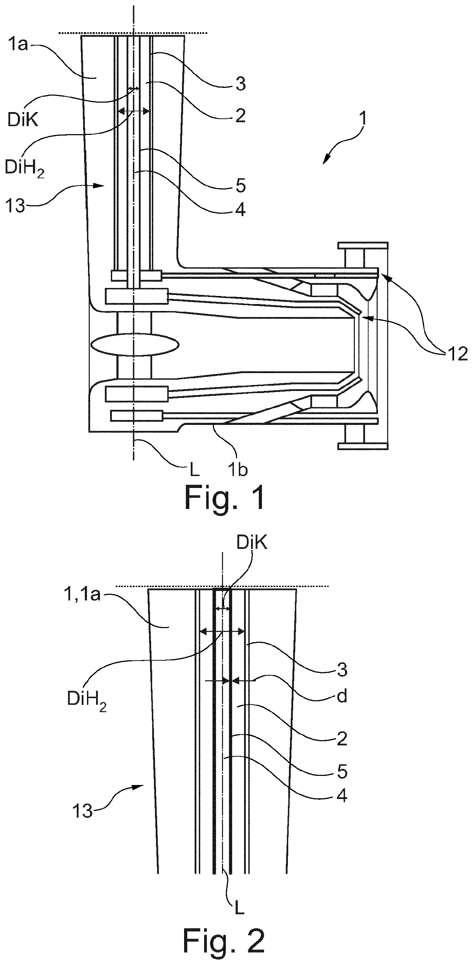

Fig. 1 zeigt in einer Darstellung im Längsschnitt eine Düsenvorrichtung 1 zur alternativen und/oder zeitgleichen Zugabe von gasförmigem Kraftstoff und/oder flüssigem Kraftstoff in eine Brennkammer einer Gasturbinenanordnung, insbesondere des Triebwerks eines Luftfahrzeugs.

Die Düsenvorrichtung 1 ist zum Betrieb mit Wasserstoff als gasförmigem Kraftstoff und einem kerosinbasierten und/oder einem kerosinverwandten Kraftstoff (z. B. Jet A-1, Diesel oder ein synthetischer Ersatzkraftstoff (SAF - "sustainable aviation fuel")) als Flüssig-Kraftstoff ausgelegt. Die Kraftstoffe können alternativ zueinander oder zeitgleich zum Einsatz kommen.

Die Düsenvorrichtung 1 weist einen Düsenhauptkörper 1b auf, über den im Betrieb gasförmiger und/oder flüssiger Kraftstoff mittels Düsenöffnungen 12 in die Brennkammer eingespritzt wird. Die Düsenöffnungen 12 für gasförmigen Kraftstoff und flüssigen Kraftstoff sind insbesondere unterschiedlich ausgebildet.

Weiterhin weist die Düsenvorrichtung 1 einen entlang einer Längsachse L ausgerichteten Düsenhalter 1a auf. Eine vergrößerte Darstellung eines Teils des Düsenhalters 1a ist in Fig. 2 gezeigt.

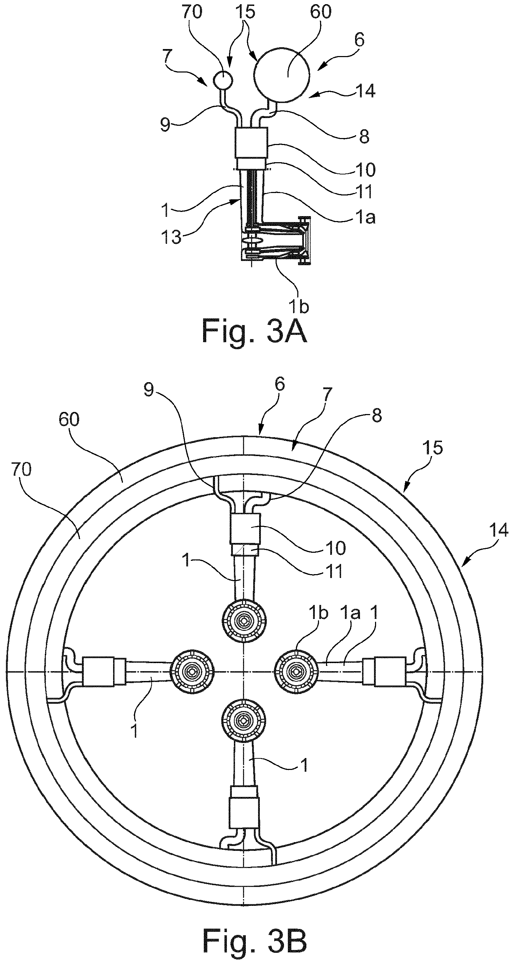

Innerhalb des Düsenhalters 1a sind eine Gas-Kraftstoffleitung 2 zur Strömungsverbindung zwischen einem Gas-Zuleitungssystem 7 (vgl. Fig. 3A, B) und eine Flüssig-Kraftstoffleitung 4 zur Strömungsverbindung zwischen einem Flüssig-Zuleitungssystem 6 (vgl. Fig. 3A, B) und den Düsenöffnungen 12 angeordnet.

Die Gas-Kraftstoffleitung 2 und die Flüssig-Kraftstoffleitung 4 sind dazu ausgebildet, gesammelt den jeweiligen Kraftstoff (gasförmig und flüssig) zum Betrieb einer jeweiligen Düsenvorrichtung 1 an den Düsenhauptkörper 1b mit einer jeweiligen Verteileranordnung (für gasförmigen und für flüssigen Kraftstoff) zu leiten. Mittels der Verteileranordnungen werden im Betrieb die jeweiligen Kraftstoffe an die entsprechenden Düsenöffnungen 12 geleitet.

Die Gas-Kraftstoffleitung 2 und die Flüssig-Kraftstoffleitung 4 sind insbesondere zylindrisch, mit einem kreisförmigen Umfang, ausgebildet und erstrecken sich längs, symmetrisch, zu der Längsachse L. Die Gas-Kraftstoffleitung 2 erstreckt sich zumindest axial großteils zylindrisch um die Flüssig-Kraftstoffleitung 4, koaxial bezüglich der Längsachse L, unter Bildung eines symmetrischen Ringspaltes. Eine Wandung 5 der Flüssig-Kraftstoffleitung 4 weist eine Wandstärke d auf. Die Gas-Kraftstoffleitung 2 ist von einer Wandung 3 umgrenzt.

Die innen liegende Flüssig-Kraftstoffleitung 4 weist zumindest großteils einen Strömungsquerschnitt mit einem kreisförmigen Durchmesser DiK (Innendurchmesser der Wandung 5) auf. Die zylindrisch um die Flüssig-Kraftstoffleitung 4 angeordnete Gas-Kraftstoffleitung 2 weist zumindest großteils einen kreisringförmigen Strömungsquerschnitt mit einem kreisförmigen Durchmesser DiH2 (Innendurchmesser der Wandung 3) auf.

Für einen optimierten Betrieb mit sowohl gasförmigen Kraftstoffen als auch flüssigen Kraftstoffen sind die Gas-Kraftstoffleitung 2 und die Flüssig-Kraftstoffleitung 4 in einem korrelierten Abschnitt 13 zueinander korreliert ausgelegt. Dabei ist ein Strömungsquerschnitt AiH2 der Gas-Kraftstoffleitung 2 zu einem Strömungsquerschnitt AiK der Flüssig-Kraftstoffleitung mit einem Faktor F proportional, wobei gilt:

AiH2 = F * AiK, mit F zwischen 2,4 und 3, vorzugsweise zwischen 2,6 und 2,8, z. B. 2,7.

Es hat sich herausgestellt, dass durch diese Auslegung im Betrieb für Wasserstoff als gasförmigem Kraftstoff und dem kerosinbasierten bzw. kerosinverwandten Kraftstoff vorteilhafterweise unter typischen Einsatzbedingungen eines Luftfahrzeugs (im Boden- und/oder Luftbetrieb) ähnliche Strömungseigenschaften erreicht werden können. Dies bringt Vorteile z.B. hinsichtlich der Steuerung und/oder Regelung des Triebwerks.

Der korrelierte Abschnitt 13 bezieht sich auf die gleiche axiale Position bezüglich der Gas-Kraftstoffleitung 2 und der Flüssig-Kraftstoffleitung 4, d.h. die Strömungsquerschnitte AiK, AiH2 bzw. Durchmesser DiK, DiH2 an einer bestimmten axialen Position bzw. einem bestimmten axialen Abschnitt sind mit dem Faktor F proportional zueinander. Der korrelierte Abschnitt 13 erstreckt sich über einen Großteil, mehr als 50 %, vorzugsweise mehr als 80 % der Länge der Gas-Kraftstoffleitung 2 und der Flüssig-Kraftstoffleitung 4, beispielsweise lediglich ausgenommen von Übergangsbereichen, in denen sich die Anordnung der Kraftstoffleitungen 2, 4 zueinander und/oder der Verlauf von zumindest (oder insbesondere lediglich) einer Kraftstoffleitung (z. B. bezüglich des Strömungsquerschnitts und/oder der Krümmung) ändert. Bei dem in Fig. 1 gezeigten Beispiel ergibt sich aus dem gegebenen Durchmesser DiK der Flüssig-Kraftstoffleitung 4 folgender Zusammenhang für den Durchmesser DiH2 der Gas-Kraftstoffleitung 2:

$AiK = 0,25 \times \pi \times (DiK)^2$ (Kreisfläche des Strömungsquerschnitts der Flüssig-Kraftstoffleitung 4),

$AiH2 = 0,25 \times \pi \times (DiH2)^2 - 0,25 \times \pi \times (DiK + 2 \times d)^2$ (Kreisringfläche des Strömungsquerschnitts der Gas-Kraftstoffleitung 2)

$$DiH2 = \sqrt{4 \times (AiH2 + 0,25 \times \pi \times (DiK + 2 \times d)^2)/\pi}$$

mit $AiH2 = F * AiK$ , mit F = 2,7 oder 2,6 bis 2,8.

Beispielhafte Werte ergeben sich zu:

DiK = 6 mm
$AiK = 28,27 \ mm^2$

$$AiH2 = 2,7 * AiK = 76,34 \text{ mm}^2$$

d = 0,5 mm
DiH2 = 12,09 mm

Fig. 3A und Fig. 3B zeigen ein Zuleitungssystem 14 und einer der an dem Zuleitungssystem 14 angeordneten Düsenvorrichtungen 1 im Querschnitt (Fig. 3A) sowie eine Frontansicht (mit Blickrichtung aus einem Brennraum) auf das Zuleitungssystem 14, an dem beispielhaft vier Düsenvorrichtungen 1 angeordnet sind (Fig. 3 B).

Das Zuleitungssystem 14 umfasst ein Gas-Zuleitungssystem 6 zur Führung des gasförmigen Kraftstoffes an die Düsenvorrichtungen 1. Weiterhin umfasst das Zuleitungssystem 14 ein Flüssig-Zuleitungssystem 7 zur Führung des flüssigen Kraftstoffes an die Düsenvorrichtungen 1. Die Düsenvorrichtungen 1 weisen jeweils insbesondere den korrelierten Abschnitt 13 auf.

Das Gas-Zuleitungssystem 6 umfasst eine Gas-Ringleitung 60 und, pro Düsenvorrichtung 1 genau eine, Gas-Anschlussleitung 8. Das Flüssig- Zuleitungssystem 7 umfasst eine Flüssig-Ringleitung 70 und, pro Düsenvorrichtung 1 genau eine, Flüssig-Anschlussleitung 9.

Die Gas-Ringleitung 60 und die Flüssig-Ringleitung 70 sind ringförmig ausgebildet, zur Anordnung außen radial um eine Brennkammer verlaufend (in Fig. 3A und Fig. 3B nicht gezeigt). Die Gas-Ringleitung 60 weist einen kreisförmigen Strömungsquerschnitt AiH2 mit einem Durchmesser DiH2 auf. Die Flüssig-Ringleitung 70 weist einen kreisförmigen Strömungsquerschnitt AiK mit einem Durchmesser DiK auf.

Die Gas-Anschlussleitung 8 und die Flüssig-Anschlussleitung 9 sind jeweils insbesondere flexibel ausgebildet. Die Gas-Anschlussleitung 8 weist in ihrer Grundform einen kreisförmigen Strömungsquerschnitt AiH2 mit einem Durchmesser DiH2 auf. Die Flüssig-Anschlussleitung 9 weist in ihrer Grundform einen kreisförmigen Strömungsquerschnitt AiK mit einem Durchmesser DiK auf.

Die Düsenvorrichtungen 1 sind jeweils in geeigneter Weise mit Verbindungselementen 10 und/oder 11 an das Zuleitungssystem 14 angeschlossen.

Für einen optimierten Betrieb mit sowohl gasförmigen Kraftstoffen als auch flüssigen Kraftstoffen sind die Gas-Leitungsabschnitte und die Flüssig-Leitungsabschnitte in dem Zuleitungssystem 14, umfassend die Ringleitungen 60, 70 und die Anschlussleitungen 8, 9, in zumindest einem korrelierten Abschnitt 15, korreliert zueinander ausgelegt, wobei jeweils der Strömungsquerschnitt des Gas-Leitungsabschnitts AiH2 mit dem Faktor F proportional zu dem Strömungsquerschnitt des Flüssig-Leitungsabschnitts AiK ist, wobei gilt:
AiH2 = F * AiK, mit F zwischen 2,4 und 3, vorzugsweise zwischen 2,6 und 2,8, z. B. 2,7.

Für jeweils kreisförmige Strömungsquerschnitte der korrelierten Gas- und Flüssig-Leitungsabschnitte ergibt sich mithin

$$DiH2 = 1,643 * DiK, \text{ mit } F = 2,7,$$

oder

$$DiH2 = 1,612 \text{ bis } 1,673 * DiK \text{ für } F = 2,6 \text{ bis } 2,8.$$

Die Korrelation bezieht sich insbesondere auf Leitungsabschnitte gleicher Funktion ("gleichartiger Leitungsabschnitte"), beispielsweise zwischen den Ringleitungen 60, 70 und/oder zwischen den Anschlussleitungen 8, 9, und/oder jeweils gleichförmigen, z. B. kreisförmigen, Strömungsquerschnitten.

Die korrelierten Abschnitte 15 nehmen jeweils einen Großteil der Leitungslänge ein, etwa über eine Erstreckung von mehr als 50 %, vorzugsweise mehr als 80 %, beispielsweise lediglich ausgenommen von Übergangsbereichen, in denen sich die Anordnung der Leitungsabschnitte 2, 4 zueinander und/oder der Verlauf von zumindest (oder lediglich) eines gleichartigen Leitungsabschnitts (z. B. bezüglich des Strömungsquerschnitts und/oder der Krümmung) ändert.

Insbesondere wenn auch die Düsenvorrichtungen 1 mit den korrelierten Abschnitten 13 ausgebildet sind, ergeben sich über einen Großteil des Leitungsverlaufs des Zuleitungssystems 14 und der Düsenvorrichtung 1 vorteilhafterweise gleichartige Strömungsverhältnisse im Betrieb des Triebwerkes mit gasförmigen Kraftstoffen oder mit flüssigen Kraftstoffen, wodurch der Betrieb insbesondere hinsichtlich der Steuerung und/oder Regelung optimiert werden kann.

**Bezugszeichenliste**

| 1 | Düsenvorrichtung |
|---|---|
| 1a | Düsenhalter |
| 1b | Düsenhauptkörper |
| 2 | Gas-Kraftstoffleitung |
| 3 | Wandung |
| 4 | Flüssig-Kraftstoffleitung |
| 5 | Wandung |
| 6 | Gas-Zuleitungssystem |
| 60 | Gas-Ringleitung |
| 7 | Flüssig-Zuleitungssystem |
| 70 | Flüssig-Ringleitung |
| 8 | Gas-Anschlussleitung |
| 9 | Flüssig-Anschlussleitung |
| 10 | Verbindungsmittel |
| 11 | Verbindungsmittel |
| 12 | Düsenöffnung |
| 13 | korrelierter Abschnitt |
| 14 | Zuleitungssystem |
| 15 | korrelierter Abschnitt |
| DiH2 | Durchmesser |
| DiK | Durchmesser |
| d | Wandstärke |
| L | Längsachse |

**Patentansprüche**

1. Düsenvorrichtung (1) zur Zugabe zumindest eines gasförmigen Kraftstoffes und eines flüssigen Kraftstoffes in eine Brennkammer einer Gasturbinenanordnung, insbesondere eines Triebwerks eines Luftfahrzeugs, umfassend

    - einen Düsenhauptkörper (1a) mit Düsenöffnungen (12) zur Einspritzung des gasförmigen Kraftstoffes und/oder des flüssigen Kraftstoffes in die Brennkammer, und
    - zumindest eine Flüssig-Kraftstoffleitung (4) zur Strömungsverbindung zwischen einem Flüssig-Zuleitungssystem (6) und den Düsenöffnungen (12), und zumindest eine Gas-Kraftstoffleitung (2) zur Strömungsverbindung zwischen einem Gas-Zuleitungssystem (7) und den Düsenöffnungen (12), **dadurch gekennzeichnet,**

    **dass** zumindest abschnittsweise, in zumindest einem korrelierten Abschnitt (13), die Gas-Kraftstoffleitung (2) korreliert zu der Flüssig-Kraftstoffleitung (4) ausgelegt ist, wobei ein Strömungsquerschnitt AiH2 der Gas-Kraftstoffleitung (2) zu einem Strömungsquerschnitt AiK der Flüssig-Kraftstoffleitung (4) mit einem Faktor F proportional ist, wobei gilt:
    AiH2 = F *Aik, mit F zwischen 2,4 und 3, vorzugsweise zwischen 2,6 und 2,8, z. B. 2,7.

2. Düsenvorrichtung (1) nach Anspruch 1,
    **dadurch gekennzeichnet,**
    **dass** der korrelierte Abschnitt (13) zumindest innerhalb eines Düsenhalters (1a) der Düsenvorrichtung (1) angeordnet ist.

3. Düsenvorrichtung (1) nach Anspruch 1 oder 2,
    **dadurch gekennzeichnet,**
    **dass** der korrelierte Abschnitt (13) über einen Großteil, mehr als 50%, vorzugsweise mehr als 80%, der Länge der Gas-Kraftstoffleitung (2) und der Flüssig-Kraftstoffleitung (4) erstreckt ist, z. B. ausgenommen von Übergangsbereichen.

4. Düsenvorrichtung (1) nach einem der vorhergehenden Ansprüche,
    **dadurch gekennzeichnet,**
    **dass** die Gas-Kraftstoffleitung (2) und/oder die Flüssig-Kraftstoffleitung (4) zumindest in dem korrelierten Abschnitt (13) einen kreisförmigen Umfang des Strömungsquerschnitts AiH2, AiK aufweisen.

**5.** Düsenvorrichtung (1) nach einem der vorhergehenden Ansprüche,
**dadurch gekennzeichnet,**
**dass** die Gas-Kraftstoffleitung (2) zumindest in dem korrelierten Abschnitt (13), insbesondere zylindrisch und/oder koaxial, um die Flüssig-Kraftstoffleitung (4) angeordnet ist.

**6.** Düsenvorrichtung (1) nach einem der vorhergehenden Ansprüche,
**dadurch gekennzeichnet,**
**dass** die Düsenvorrichtung (1) zum Betrieb mit Wasserstoff als gasförmigem Kraftstoff und einem kerosinbasierten und/oder einem kerosinverwandten Kraftstoff als Flüssig-Kraftstoff ausgelegt ist.

**7.** Set umfassend zumindest eine Gas-Anschlussleitung (8) und zumindest eine Flüssig-Anschlussleitung (9) zum Einbau in ein Zuleitungssystem (14) mit einem Gas-Zuleitungssystem (6) zur Führung eines gasförmigen Kraftstoffes an zumindest eine Düsenvorrichtung (1) und mit einem Flüssig-Zuleitungssystem (7) zur Führung eines flüssigen Kraftstoffes an zumindest eine Düsenvorrichtung (1), wobei die Düsenvorrichtung (1) insbesondere nach einem der vorhergehenden Ansprüche ausgebildet ist,
**dadurch gekennzeichnet,**
**dass** zumindest abschnittsweise, in zumindest einem korrelierten Abschnitt (15), die Gas-Anschlussleitung (8) korreliert zu der Flüssig-Anschlussleitung (9) ausgelegt ist, wobei ein Strömungsquerschnitt $AiH2$ der Gas-Anschlussleitung (8) zu einem Strömungsquerschnitt $AiK$ der Flüssig-Anschlussleitung (9) mit einem Faktor F proportional ist, wobei gilt:
$AiH2 = F * Aik$, mit F zwischen 2,4 und 3, vorzugsweise zwischen 2,6 und 2,8, z. B. 2,7.

**8.** Set umfassend zumindest eine Gas-Ringleitung (60), mit insbesondere zumindest abschnittsweise kreisförmigem Strömungsquerschnitt, und zumindest eine Flüssig-Ringleitung (70), mit insbesondere zumindest abschnittsweise kreisförmigem Strömungsquerschnitt, zum Einbau in ein Zuleitungssystem (14) mit einem Gas-Zuleitungssystem (6) zur Führung eines gasförmigen Kraftstoffes an zumindest eine Düsenvorrichtung (1) und mit einem Flüssig-Zuleitungssystem (7) zur Führung eines flüssigen Kraftstoffes an zumindest eine Düsenvorrichtung (1), wobei die Düsenvorrichtung (1) insbesondere nach einem der vorhergehenden Ansprüche ausgebildet ist,
**dadurch gekennzeichnet,**
**dass** zumindest abschnittsweise, in zumindest einem korrelierten Abschnitt (15), die Gas-Ringleitung (60) korreliert zu der Flüssig-Ringleitung (70) ausgelegt ist, wobei ein Strömungsquerschnitt $AiH2$ der Gas-Ringleitung (60) zu einem Strömungsquerschnitt $AiK$ der Flüssig-Ringleitung (70) mit einem Faktor F proportional ist, wobei gilt:
$AiH2 = F * Aik$, mit F zwischen 2,4 und 3, vorzugsweise zwischen 2,6 und 2,8, z. B. 2,7.

**9.** Set nach Anspruch 7 und/oder 8,
**dadurch gekennzeichnet,**

**dass** der korrelierte Abschnitt (15) über einen Großteil, mehr als 50 %, vorzugsweise mehr als 80 %, der Länge der Gas-Anschlussleitung (8) und der Flüssig-Anschlussleitung (9), und/oder der Gas-Ringleitung (60) und der Flüssig-Ringleitung (70) erstreckt ist, z. B. ausgenommen von Übergangsbereichen.

**10.** Set nach einem der Ansprüche 7 bis 9,
**dadurch gekennzeichnet,**

**dass** die Gas-Anschlussleitung (8) und die Flüssig-Anschlussleitung (9) und/oder
die Gas-Ringleitung (60) und die Flüssig-Ringleitung (70)
zum Betrieb mit Wasserstoff als gasförmigem Kraftstoff und einem kerosinbasierten und/oder einem kerosinverwandten Kraftstoff als Flüssig-Kraftstoff ausgelegt sind.

**11.** Zuleitungssystem (14) mit einem Gas-Zuleitungssystem (6) zur Führung eines gasförmigen Kraftstoffes an zumindest eine Düsenvorrichtung (1) und mit einem Flüssig-Zuleitungssystem (7) zur Führung eines flüssigen Kraftstoffes an zumindest eine Düsenvorrichtung (1), wobei die Düsenvorrichtung (1) insbesondere nach einem der vorhergehenden Ansprüche ausgebildet ist,

mit zumindest einem Set umfassend zumindest eine Gas-Anschlussleitung (8) und zumindest eine Flüssig-Anschlussleitung (9) nach Anspruch 7 oder 9 bis 10 und/oder
mit einem Set umfassend zumindest eine Gas-Ringleitung (60) und zumindest eine Flüssig-Ringleitung (70) nach einem der Ansprüche 8 bis 10.

12. Gasturbinenanordnung, insbesondere Triebwerk für ein Luftfahrzeug, mit zumindest einer Düsenvorrichtung (1) nach einem der Ansprüche 1 bis 6 und/oder mit zumindest einem Zuleitungssystem (14) nach Anspruch 11.

Fig. 1

Fig. 2

Fig. 3A

Fig. 3B

Europäisches
Patentamt

European
Patent Office

Office européen
des brevets

**EUROPÄISCHER RECHERCHENBERICHT**

Nummer der Anmeldung

EP 23 18 6142

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/093570 A1 (MIYAMOTO KENJI [JP] ET AL) 28. März 2019 (2019-03-28) * Absatz [0096] – Absatz [0097]; Abbildungen 3,6,9 * ----- | 1-6,12 | INV. F23R3/28 F23R3/36 |
| X | US 2016/084160 A1 (ZHANG HUA [US] ET AL) 24. März 2016 (2016-03-24) * Absätze [0028], [0029], [0032]; Abbildungen 3-5 * ----- | 7-11 | |
| X | EP 2 270 398 A1 (SIEMENS AG [DE]) 5. Januar 2011 (2011-01-05) * Absatz [0020] – Absatz [0026]; Abbildungen 1-5 * * Absatz [0032] – Absatz [0034]; Abbildungen 6-8 * ----- | 1-6,12 | |
| X | US 2016/116168 A1 (BANDARU RAMARAO VENKAT [US] ET AL) 28. April 2016 (2016-04-28) * Absätze [0050], [0051]; Abbildungen 3,4 * ----- | 1-4,6,12 | |
| X | US 2005/086944 A1 (COWAN CURTIS C [US]) 28. April 2005 (2005-04-28) * Absatz [0024]; Abbildungen 6,7 * ----- | 1-4,6,12 | **RECHERCHIERTE SACHGEBIETE (IPC)** F23R |
| A | US 2015/362194 A1 (OGATA MASAHIRO [JP] ET AL) 17. Dezember 2015 (2015-12-17) * Absatz [0030]; Abbildung 2 * ----- | 6 | |

Der vorliegende Recherchenbericht wurde für alle Patentansprüche erstellt

| Recherchenort | Abschlußdatum der Recherche | Prüfer |
|---|---|---|
| Den Haag | 29. November 2023 | Mootz, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 6142

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2023

| Im Recherchenbericht angeführtes Patentdokument | Datum der Veröffentlichung | Mitglied(er) der Patentfamilie | Datum der Veröffentlichung |
|---|---|---|---|
| US 2019093570 A1 | 28-03-2019 | CN 108700298 A | 23-10-2018 |
| | | JP 6626743 B2 | 25-12-2019 |
| | | JP 2017156033 A | 07-09-2017 |
| | | SA 518392299 B1 | 23-03-2022 |
| | | US 2019093570 A1 | 28-03-2019 |
| | | WO 2017150364 A1 | 08-09-2017 |
| US 2016084160 A1 | 24-03-2016 | CN 103062803 A | 24-04-2013 |
| | | EP 2587160 A2 | 01-05-2013 |
| | | US 2013098041 A1 | 25-04-2013 |
| | | US 2016084160 A1 | 24-03-2016 |
| EP 2270398 A1 | 05-01-2011 | CN 102472494 A | 23-05-2012 |
| | | EP 2270398 A1 | 05-01-2011 |
| | | EP 2449310 A1 | 09-05-2012 |
| | | RU 2012102975 A | 10-08-2013 |
| | | WO 2011000615 A1 | 06-01-2011 |
| US 2016116168 A1 | 28-04-2016 | CN 107076421 A | 18-08-2017 |
| | | DE 112015004452 T5 | 27-07-2017 |
| | | RU 2017116446 A | 14-11-2018 |
| | | US 2016116168 A1 | 28-04-2016 |
| | | WO 2016069339 A1 | 06-05-2016 |
| US 2005086944 A1 | 28-04-2005 | EP 1526333 A1 | 27-04-2005 |
| | | EP 2282123 A1 | 09-02-2011 |
| | | JP 4101794 B2 | 18-06-2008 |
| | | JP 2005127708 A | 19-05-2005 |
| | | US 2005086944 A1 | 28-04-2005 |
| | | US 2006283192 A1 | 21-12-2006 |
| | | US 2009151358 A1 | 18-06-2009 |
| | | US 2011308254 A1 | 22-12-2011 |
| US 2015362194 A1 | 17-12-2015 | CA 2885287 A1 | 19-03-2015 |
| | | CN 105452775 A | 30-03-2016 |
| | | EP 2902708 A1 | 05-08-2015 |
| | | EP 2955445 A1 | 16-12-2015 |
| | | JP 5759651 B1 | 05-08-2015 |
| | | JP WO2015037295 A1 | 02-03-2017 |
| | | US 2015362194 A1 | 17-12-2015 |
| | | US 2016033131 A1 | 04-02-2016 |
| | | WO 2015037295 A1 | 19-03-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160201897 A1
- CN 112709639 A